# EUROPEAN PATENT APPLICATION

(11) **EP 4 831 695 A1**
(43) Date of publication of application: **28.10.2026**
(21) Application number: 24908067.2
(22) Date of filing: 18.12.2024
(51) Int. Cl.: G02B 1/00, G02B 3/00, G02B 5/32

(54) **METASURFACE AND MANUFACTURING METHOD FOR SAME**

(30) Priority: 18.12.2023 KR 20230185194
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR); POSTECH Research and Business Development Foundation, Pohang-si, Gyeongsangbuk-do 37673 (KR)
(72) Inventor: RHO, Jun-Suk, Pohang-si, Gyeongsangbuk-do 37673 (KR); KIM, Joo-Hoon, Pohang-si, Gyeongsangbuk-do 37673 (KR); SEONG, Jun-Hwa, Pohang-si, Gyeongsangbuk-do 37673 (KR)
(74) Representative: Pfenning, Meinig & Partner mbB
(86) International application number: PCT/KR2024/020618
(87) International publication number: WO 2025/135784

(57) **Abstract**

A metasurface according to one aspect of the present invention is a metasurface comprising: a substrate; and a plurality of nanostructures formed on at least one surface of the substrate, wherein each of the nanostructures comprises: a structure portion made of a polymer; and a high-refractive material layer formed on a surface of at least a part of the structure portion, and the high-refractive material layer has a refractive index of 2.0 or greater with respect to light having a wavelength of 400 nm.

## Description

### Technical Field

The present disclosure relates to a metasurface and a method for manufacturing the same.

### BACKGROUND ART

A metasurface generally refers to a surface on which a pattern having a size at the level of the wavelength of light or smaller is formed. By modulating the phase, intensity, direction, etc., of light according to the arrangement of the patterns, the metasurface can achieve various electromagnetic or wave-optical effects. Accordingly, the metasurface can be used for applications including, but not limited to, lenses, holograms, antennas, other optical devices, and acoustic and vibration control.

Therefore, since metamaterials were proposed as a higher-level concept in the late 20th century, scientists have conducted extensive research to identify the properties of metamaterials or metasurfaces and to pioneer their applications.

However, manufacturing a metasurface is challenging because it requires arranging a large number of nanostructures of micrometer scale or smaller on a surface according to a designed geometric structure. For example, a method such as e-beam lithography can be used to form fine structures. In this case, the surrounding area must be removed one by one by irradiating an electron beam to reveal the shape of the nanostructure. This process is very slow, the achievable area is very limited, and as a result, it is not economically feasible to manufacture.

As an alternative to solve this problem, a method of forming nanostructures using an imprint method has been proposed. The imprint method is a process in which a reusable mold is filled with a polymer material (e.g., resin) and transferred to a substrate, which has the advantage of manufacturing metasurfaces at a high process speed.

However, due to the nature of the process, a polymer material such as resin must be used as the material for the nanostructures. In the case of resin, the refractive index for light is not high, which leads to a problem of very low efficiency of the metasurface.

### Disclosure of Invention

### Technical Problem

According to one aspect of the present disclosure, a metasurface with high efficiency and a method for manufacturing the same can be provided.

Furthermore, according to another aspect of the present disclosure, a metasurface and a method for manufacturing the same can be provided that can prevent a decrease in refractive index and increase efficiency even when nanostructures are manufactured by a method such as the imprint method.

The problems of the present disclosure are not limited to the above-mentioned content. Anyone with ordinary skill in the art to which the present disclosure pertains will have no difficulty in understanding additional problems of the present disclosure from the contents of the specification.

### Solution to Problem

A metasurface according to one aspect of the present disclosure includes a substrate and a plurality of nanostructures formed on at least one surface of the substrate, wherein the nanostructures include a structural part made of a polymer and a high-refractive-index material layer formed on at least a portion of the surface of the structural part, and the high-refractive-index material layer may have a refractive index of 2.0 or more for light with a wavelength of 400 nm.

At this time, the high-refractive-index material layer may have a refractive index of 3.0 or less for light with a wavelength of 400 nm.

In addition, the thickness of the high-refractive-index material layer may be 5 to 30 nm.

And, the high-refractive-index material layer may include ZrO₂.

In addition, the high-refractive-index material layer may be coated on the surface of the structural part by Atomic Layer Deposition (ALD) or Chemical Vapor Deposition (CVD).

And, the structural part of the nanostructure may be formed by imprinting.

And, the sum of the length, width, and height of the structural part may be 500 to 1500 nm, wherein the length of the structural part is 180 to 300 nm, the width of the structural part is 30 to 100 nm, and the height of the structural part is 450 to 700 nm.

In the aforementioned metasurface, the average distance (period) between the center of one structural part and the center of an adjacent structural part may be 200 to 400 nm.

A method for manufacturing a metasurface according to another aspect of the present disclosure includes: preparing a substrate; forming a plurality of structural parts made of a polymer on the substrate by an imprint method; and forming a high-refractive-index material layer on at least a portion of the surface of the plurality of structural parts, wherein the high-refractive-index material layer may have a refractive index of 2.0 or more for light with a wavelength of 400 nm.

At this time, the high-refractive-index material layer may be obtained by being formed by coating on the surface of the structural part by Atomic Layer Deposition (ALD) or Chemical Vapor Deposition (CVD).

Furthermore, when coating the high-refractive-index material layer on the surface of the structural part by Atomic Layer Deposition (ALD), the time for injecting the precursor material into the vacuum chamber per cycle may be 2 to 4 seconds, and the time for performing the plasma treatment may be 20 to 40 seconds.

In addition, the thickness of the high-refractive-index material layer may be 10 to 20 nm.

And, the sum of the length, width, and height of the structural part formed in the step of forming the plurality of structural parts may be 500 to 1500 nm.

### ADVANTAGEOUS EFFECTS OF INVENTION

According to the present disclosure, by including a high-refractive-index material layer on the surface of at least a portion of the structural part of the nanostructure, the effective refractive index of the nanostructure can be controlled, and as a result, the efficiency of the metasurface can be improved.

### BRIEF DESCRIPTION OF DRAWINGS

FIG. 1 is a diagram illustrating an exemplary shape of a metasurface (1) according to an embodiment of the present disclosure.
FIG. 2 is a graph showing the refractive index (n) and extinction coefficient (k) according to the wavelength of a ZrO₂ layer provided in an embodiment of the present disclosure.
FIG. 3 is a graph showing the measurement of the energy band gap of a ZrO₂ layer provided in an embodiment of the present disclosure.
FIG. 4 is a process flowchart illustrating an exemplary method of manufacturing a metasurface according to an embodiment of the present disclosure by an imprinting method.
FIG. 5 is an apparatus for measuring the focusing characteristics of a metasurface, wherein LP denotes a Linear Polarizer, QWP denotes a Quarter Wave Plate, ML denotes a MetaLens (metasurface), and OL denotes an Objective Lens.
FIG. 6 is a result of measuring the characteristics of a metasurface according to an embodiment of the present disclosure with the apparatus of FIG. 5.
FIG. 7 is an apparatus for measuring the resolution of a metasurface, wherein LP denotes a Linear Polarizer, QWP denotes a Quarter Wave Plate, OL denotes an Objective Lens, RT denotes a Resolution Target (USAF 1951 target), and ML denotes a MetaLens (metasurface).
FIG. 8 is a graph (b) showing the results of measuring the resolution using the image form (a) for measuring the resolution with the apparatus of FIG. 7.
FIG. 9 is a graph showing the conversion efficiency by wavelength of a metalens obtained by an embodiment of the present disclosure.
FIG. 10 is a graph (a) showing the change in conversion efficiency according to the length and width of the structural part, and a graph (b) showing the change in conversion efficiency according to the thickness of the high-refractive-index material layer.
FIG. 11 is a graph comparing the change in the refractive index of the high-refractive-index material layer according to the injection time of the precursor material and the plasma treatment time when coating the high-refractive-index material layer on the structural part by atomic layer deposition.

### Best Mode for the Invention

Hereinafter, embodiments of the present disclosure will be described in detail with reference to the accompanying drawings. However, the spirit of the present disclosure is not limited to the illustrated embodiments.

For example, a person skilled in the art who understands the spirit of the present disclosure can easily propose other embodiments included in the scope of the spirit of the present disclosure through addition, change, or deletion of components, which will also be included in the scope of the spirit of the present disclosure.

In addition, throughout the specification, the term 'comprising' a certain component means that it may include other components, not excluding other components, unless otherwise stated. Furthermore, the distinctions of 'up and down', 'front and rear', or 'left and right' in this specification do not mean absolute physical positional relationships, and it should be noted that even if it is described as being on top, it can be implemented in a shape that exists below, unless it contradicts natural phenomena or is clearly impossible to implement. In addition, the directions illustrated in the specification are used to aid understanding and are not limited to the directions illustrated in the drawings.

In addition, unless otherwise specified in this specification, the refractive index refers to the refractive index for light with a wavelength of 400 nm.

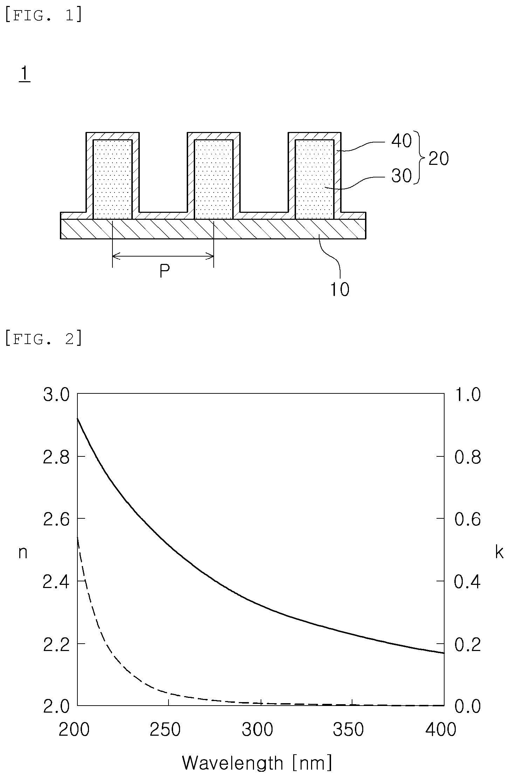

FIG. 1 shows an exemplary shape of a metasurface (1) according to an embodiment of the present disclosure. As shown in the figure, the metasurface (1) of the present disclosure includes a substrate (10) and a plurality of nanostructures (20) formed on at least one surface of the substrate (10), wherein the nanostructure (20) includes a structural part (30) made of a polymer and a high-refractive-index material layer (40) formed on at least a portion of the surface of the structural part (30).

That is, the present disclosure aims to increase the effective refractive index of the nanostructure (20) by forming the nanostructure (20) with a structural part (30) made of a polymer with a relatively low refractive index and a material layer (40) with a high refractive index formed on at least a portion of the surface of the structural part. The material layer with a high refractive index (high-refractive-index material layer) may be formed on the entire surface of the structural part. Although not limited thereto, the polymer included in the structural part (20) can be advantageously formed on the substrate surface by an imprint method, which has the advantage of economically manufacturing the nanostructure (20). The polymer usable in the present disclosure is not limited in its type as long as it is a polymer that can be used in the imprint method. However, non-limiting examples of polymers usable in the present disclosure include photocurable polymers or thermosetting polymers, and in one embodiment of the present disclosure, MINS-311RM from Minuta Tech can be used. However, although not necessarily limited thereto, since the refractive index of polymers is generally not high, at a level of 1.4 to 1.5, the polymer is not advantageous in terms of the efficiency of a metasurface that aims to obtain electromagnetic or optical effects by refracting electromagnetic waves such as light. In the present disclosure, to solve this problem, as described above, a high-refractive-index material layer with a high refractive index is formed on the surface of the structure substantially made of a polymer.

According to one embodiment of the present disclosure, the high-refractive-index material layer (40) may have a refractive index of 2.0 or more for light with a wavelength of 400 nm. By forming the high-refractive-index material layer (40) on the surface of the structural part (30), the effective refractive index of the nanostructure (20) for light with a wavelength of 400 nm can be adjusted to 1.9 or more. According to another embodiment of the present disclosure, the refractive index of the refractive index material layer (40) for light of 400 nm may be 2.0 or more, and more preferably 2.1 or more. As the refractive index of the refractive index material layer (40) increases, the effective refractive index of the nanostructure (20) can also increase, so the upper limit of the refractive index of the refractive index material layer (40) is not particularly limited. However, considering the type of material formed on the surface of the structural part (30), the upper limit of the refractive index of the high-refractive-index material layer (40) for light with a wavelength of 400 nm can be set to 3.0 in one embodiment of the present disclosure, and in another embodiment, the upper limit of the refractive index of the high-refractive-index material layer (40) can be set to 2.9.

In addition, to obtain a sufficient refractive index increasing effect, the thickness of the high-refractive-index material layer (40) may be 5 nm or more in one embodiment of the present disclosure. In another embodiment of the present disclosure, the thickness of the high-refractive-index material layer (40) may be limited to 10 nm or more. However, the thickness of the high-refractive-index material layer interacts with the shape of the nanostructure and affects the efficiency of the metasurface. If the thickness is too large, the efficiency of the metasurface may decrease. Therefore, in one embodiment of the present disclosure, the upper limit of the thickness can be set to 30 nm, and in another embodiment, the upper limit can be set to 25 nm, and in yet another embodiment, it can be set to 20 nm. In one embodiment of the present disclosure, the thickness of the high-refractive-index material layer (40) may mean the average thickness of the portion where the material layer is formed.

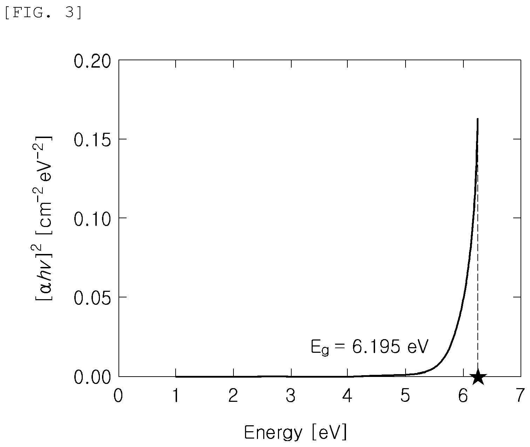

There is no limitation on the type of material constituting the high-refractive-index material layer (40) as long as it satisfies the refractive index condition. However, considering that a metasurface (1) operating in the ultraviolet region can be provided in one embodiment of the present disclosure, the material constituting the high-refractive-index material layer (40) may be ZrO₂, HfO₂, Nb₂O₅, Silicon Nitride, etc., and in one embodiment of the present disclosure, ZrO₂ may be used. For example, as can be seen in FIG. 2, the ZrO₂ provided in the embodiment of the present disclosure not only satisfies the refractive index (n, solid line) condition of the present disclosure, but also has a low absorptance (k, dotted line) in the ultraviolet region where the wavelength is 400 nm or less. In addition, as can be confirmed in FIG. 3, the band gap is also very high at 6.195 eV, which has the advantage of being transparent in the ultraviolet region. As a method for forming the high-refractive-index material layer, Atomic Layer Deposition (ALD) or Chemical Vapor Deposition (CVD) can be used. ZrO₂ can be formed on the surface of the structural part (30) by Atomic Layer Deposition (ALD). However, when such a ZrO₂ layer is formed on the surface of the structural part (30), which is typically a polymer material, it exhibits a low refractive index of 1.8 or less, and thus the overall refractive index of the nanostructure (20) may not be sufficient. However, the inventors of the present disclosure have discovered that by forming a high-refractive-index material layer with a refractive index of 2.0 or more on the surface of the structural part (30), a nanostructure with a high refractive index can be formed, leading to the present disclosure.

In one embodiment of the present disclosure, the structural part (30) of the nanostructure (20) may be formed by imprinting. That is, conventionally, nanostructures can be formed by a photolithography method such as electron beam lithography, but in this case, it was not possible to economically obtain a metasurface due to various constraints as described above. Therefore, in the present disclosure, the structural part (30) of the nanostructure (20) is formed on the surface of the substrate (10) by an imprinting method. When the structural part (30) is formed by the imprinting method, a polymer material is inevitably included in the structural part (30), and in this case, the efficiency of the metasurface (1) is reduced due to the low refractive index. However, in the case of the present disclosure, since the nanostructure (20) is obtained by forming the high-refractive-index material layer (40) on at least a portion of the surface of the structural part (30), the effective refractive index of the nanostructure (20) can be increased.

In addition, in one embodiment of the present disclosure, the sum of the length, width, and height of the structural part (30) may be 500 to 1500 nm. The size of the nanostructure (20) can be determined according to the constituent material and the wavelength of the light to be treated. Therefore, considering the properties of the structural part (30) and the high-refractive-index material layer (40) used in the present disclosure and the fact that ultraviolet light with a wavelength of 400 nm or less is treated, the sum of the length, width, and height of the structural part can be set to the above-mentioned range. In another embodiment of the present disclosure, the sum of the length, width, and height may be set to 600 to 1400 nm.

More specifically, the length of the structural part (30) may be 180 to 300 nm, and preferably 210 to 280 nm. In addition, the width of the structural part (30) may be 30 to 100 nm, and preferably 50 to 85 nm. The height of the structural part (30) may be 450 to 700 nm, and preferably 470 to 620 nm. In the present disclosure, the length and width of the structural part (30) may mean the length and width of the lowermost part, that is, the part in contact with the substrate. The structural part (30) often has a rectangular shape, but even if it does not, after drawing a rectangle (30) with the smallest area that can accommodate the shape of the lower end of the structural part (30), the long side of the rectangle can be regarded as the length and the short side as the width. If the rectangle with the smallest area that can accommodate the lower end can have various shapes, a rectangle with the largest difference between length and width can be taken, and the length and width of that rectangle can be taken as the length and width of the structural part (30).

In addition, according to the research results of the present inventors, the resonance phenomenon by wavelength of the metasurface (1) can be affected by the period of the nanostructure (20). In the case of the nanostructure (20) according to one embodiment of the present disclosure, the period may be 200 to 400 nm, and according to another embodiment, the period may be 230 to 450 nm. In the present disclosure, the period may mean the average distance between the center of one structural part and the center of a structural part adjacent to the one structural part. That is, as shown in FIG. 1, the distance P between the center of one structural part and the center of another adjacent structural part can be called a period. However, since there may be a plurality of structural parts adjacent to one structural part, in this case, the average of the distances to the adjacent structural parts can be called the period. For example, when the structural parts are arranged in a lattice form, there may be a total of four adjacent structural parts in the horizontal and vertical directions, and the average of the distances between them can be set as the period. If the average distance to an adjacent structural part is different for each structural part, the average of all these average distances can be set as the period.

The metasurface (1) can be used for various purposes depending on the arrangement of the structural parts (30), and the effects according to the arrangement are widely known in the technical field to which the present disclosure pertains. Therefore, a person of ordinary skill in the art can change and apply the arrangement of the structural parts (30) of the metasurface (1) to suit a desired use, and thus the arrangement form of the structural parts is not particularly mentioned in this specification.

In one embodiment of the present disclosure, the substrate (10) is not particularly limited as long as it can be commonly used in the technical field to which the present disclosure pertains. In some cases, the type of substrate may be applied differently depending on the use of the metasurface (1). In an exemplary embodiment, a substrate made of glass, plastic, or a flexible film may be used. In one embodiment of the present disclosure, a substrate with low absorptance in the ultraviolet (UV) region may be used, and specifically, a substrate with a bandgap energy of 8 eV or more may be used. In one embodiment of the present disclosure, the thickness of the substrate may be 0.1 mm or more. The upper limit of the thickness does not need to be particularly set, but considering practicality, it may be set to 10 cm or less, 5 cm or less, 3 cm or less, or 1 cm or less and 5 mm or less.

Hereinafter, one method of manufacturing the metasurface of the present disclosure will be described. However, the metasurface of the present disclosure does not need to be manufactured only by the manufacturing method described below, and it is a matter of course that it can be manufactured using various technologies that can be used in the technical field to which the present disclosure pertains by referring to the matters described in this specification.

The method for manufacturing a metasurface of the present disclosure may include: preparing a substrate; forming a plurality of structural parts on the substrate by an imprint method; and forming a high-refractive-index material layer on at least a portion of the surface of the plurality of structural parts.

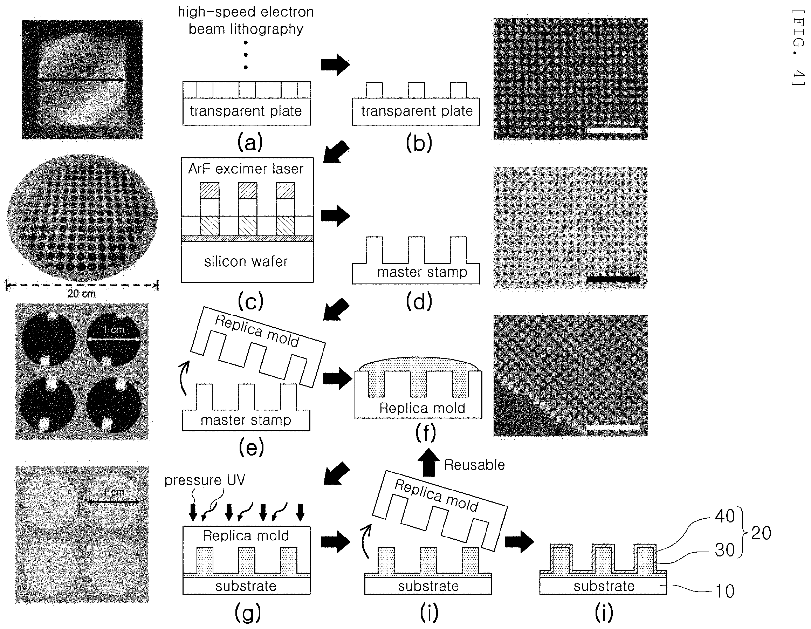

As the substrate, a substrate that meets the above-mentioned conditions can be used. A plurality of structural parts can be formed on the substrate by an imprint method. The imprint method is a well-known method in the technical field to which the present disclosure pertains, and a person of ordinary skill in the art will have no particular difficulty in implementing it without a detailed description. However, for the sake of supplementing understanding, a brief description will be given with reference to FIG. 4. The photograph attached next to each step in the figure shows the result of that step.

First, although not necessarily limited thereto, a transparent plate coated with Cr or Al is prepared. The Cr or Al is for blocking light in a subsequent lithography process, and other materials may be used as long as they can exhibit the same effect.
A photo mask with a desired pattern can be obtained(b) by irradiating an electron beam(a) onto the transparent plate. Due to the nature of the subsequent lithography process, the size of the photo mask may be larger than the size of the final pattern to be obtained, and in one embodiment of the present disclosure, a photo mask that is about 3 to 5 times larger on a length basis can be manufactured. Thereafter, for example, after applying a photoresist material on a substrate made of a silicon wafer, a master stamp can be obtained(d) by etching(c) unnecessary portions by a photolithography method using the photo mask.

Thereafter, a replica mold can be manufactured using the master stamp (e). The replica mold has a pattern in the opposite direction to the pattern formed on the master stamp; in other words, the master stamp and the replica mold are in a complementary relationship. That is, by combining the material of the replica mold with the master stamp and then separating them, a replica mold with a pattern opposite to the pattern of the master stamp can be obtained. Thereafter, the replica mold is filled with a curable polymer material that is a raw material of the structural part (30) of the nanostructure (20) of the present disclosure (f), the polymer material is transferred onto a substrate (g), and the replica mold is removed (h) to form a structural part on the substrate. In the process of transferring the polymer material onto the substrate (10) (g), the polymer material can be cured by irradiating light such as ultraviolet rays to form the structural part (30). However, the above-mentioned imprint process is an example, and any imprint technology used in the technical field to which the present disclosure pertains can be applied to the present disclosure as long as there is no reason why its application to the present disclosure is significantly impossible. In particular, the dimensions illustrated in the drawings are the dimensions used in an embodiment of the present disclosure, and it is a matter of course that the present disclosure can be applied to metasurfaces of various dimensions. The entire process does not necessarily have to be performed in a manner of manufacturing one metasurface (a substrate with a structural part formed on its surface) from one master stamp, and as illustrated in FIG. 4, it may be a mass production process of forming a plurality of metasurfaces from a plurality of master stamps on a large-area substrate at once.

Thereafter, a process of forming a high-refractive-index material layer (40) on at least a portion of the surface of the structural part is performed (i). The high-refractive-index material layer (40) can be formed by coating on the surface of the structural part by Atomic Layer Deposition (ALD) or Chemical Vapor Deposition (CVD). Atomic Layer Deposition (ALD) is not necessarily limited to this, but it may include a process of loading the substrate (10) on which the structural part (30) is formed into a chamber, applying a vacuum, injecting a precursor material (e.g., TEMAZr) into the chamber through a nozzle, and then applying O₂ plasma into the chamber to cause a metal component (e.g., Zr) in the precursor material to react with oxygen to form an oxide. In one embodiment of the present disclosure, the vacuum in the overall atomic layer deposition process can be controlled in the range of 10⁻¹ to 5 Torr. In addition, one embodiment of the present disclosure may include a step of purging with Ar gas after injecting the precursor material.

However, conventional plasma treatment is performed at a high temperature of 200°C or higher, in which case a problem may arise in that the structural part (30) made of a polymer material collapses due to heat. To prevent the structural part (30) from collapsing, it is necessary to lower the temperature of the plasma treatment to 150°C or less, preferably 100°C or less. However, in this case, a problem arises in that a large number of vacancies are formed in the high-refractive-index material layer (40) formed by atomic layer deposition, and the refractive index is reduced. Therefore, it has been generally recognized that it is difficult to form a material layer with a high refractive index on a polymer by atomic layer deposition. However, the inventors of the present disclosure have discovered that by controlling the injection time of the precursor material while lowering the plasma temperature, a high-refractive-index material layer (40) with a refractive index of 2.0 or more can be formed on the structural part without damaging the structural part (30). That is, in one embodiment of the present disclosure, when forming the high-refractive-index material layer (40) by atomic layer deposition, the time for injecting the precursor material into the vacuum chamber is set to about 2 to 4 seconds, and the plasma treatment time is set to 20 to 40 seconds. If the injection time of the precursor material is short, a sufficient refractive index is not obtained, and if the time is too long, the effect is no longer increased, and expensive precursor material is consumed more than necessary. The amount of precursor material injected is not significantly affected by the size of the chamber as long as the amount is sufficient to coat the entire substrate, and the injection time is important. However, according to one embodiment of the present disclosure, the precursor material may be added to Ar gas injected at a flow rate (SCCM) of 0.1 to 0.4 SCCM/cm³ per unit volume (cm³) of the chamber and supplied into the chamber.

In addition, if the plasma treatment time is short, the thickness of the high-refractive-index material layer formed is not sufficient, and if it is long, a problem arises in that the high-refractive-index material layer is formed outside the appropriate thickness range. A more preferable plasma treatment time may be 25 to 35 seconds. In one embodiment of the present disclosure, the temperature of the plasma treatment may be 150°C or less, preferably 100°C or less, and more preferably 80 to 100°C.

The process from the injection of the precursor material to the plasma treatment can be called one cycle, and a thin atomic layer of 10 angstroms (Å) or less is formed by one cycle of the coating process. By repeating this cycle several times, the thickness of the high-refractive-index material layer (40) formed can be adjusted to a desired level.

Descriptions of specific matters including the material, shape, and arrangement of the structural part, and the material, thickness, and refractive index of the high-refractive-index material layer that overlap with the previously described parts are omitted here.

### Mode for the Invention

Hereinafter, the present disclosure will be described in detail through examples. However, it should be noted that the following examples are for illustrating and embodying the present disclosure, and not for limiting the scope of the present disclosure. This is because the scope of the present disclosure is determined by the matters described in the claims and matters reasonably inferred therefrom.

### (Example)

### Example 1

A structural part (30) was formed by performing imprinting according to the procedure shown in FIG. 4. A photo mask pattern was formed on a circular transparent plate with a diameter of 4 cm to correspond to the length, width, and period of the structure, and was fabricated as a photo mask. The photo mask pattern was made to be four times the pattern size of the target metasurface (1), and a master stamp with a size of 1/4 of the photo mask pattern can be obtained by an electron beam lithography process. Therefore, the master stamp is a circular one with a diameter of 1 cm, and a replica mold can be manufactured using the master stamp. By installing a plurality of the master stamps on a silicon wafer with a diameter of 8 inches (about 20 cm), a plurality of corresponding replica molds can also be installed, thus enabling mass production. After filling the replica mold with an ultraviolet curable polymer material (MINS-311RM, a product of Minuta Tech), it was cured with ultraviolet rays while applying pressure to obtain a structural part (30). The structural parts (30) were arranged so that the metasurface (1) could function as a metalens.

An SiO₂ substrate with a diameter of 1 cm and a thickness of 0.5 mm (500 µm) was used as the substrate (10) for forming the structural parts during imprinting. The structural part (30) was made to have a shape with a length of 240 nm, a width of 60 nm, and a height of 550 nm, and the structural parts (30) were arranged in a regular lattice form with a period of 280 nm in both the horizontal and vertical directions.

Thereafter, after loading the substrate into a chamber with an internal volume of 30 cm * 30 cm * 1 cm, the entire surface of the substrate (10) on which the structural part (30) was formed was coated with ZrO₂ as a high-refractive-index material layer (40) using atomic layer deposition. As a specific coating method, TEMAZr was used as a precursor material during coating, and the precursor material was added to argon gas supplied at a flow rate of 200 SCCM and injected into the chamber for 3 seconds, followed by treatment with O₂ plasma for 30 seconds, and this cycle was repeated several times. The pressure in the chamber was set to 1 Torr from the injection of the precursor to the plasma treatment. It was confirmed that an atomic layer of a high-refractive-index material of about 2.8 Å was formed by one cycle, and the cycle was repeated until the desired thickness was obtained. The coating of the formed ZrO₂ was uniform in thickness without large deviations throughout, and the average thickness was 15 nm.

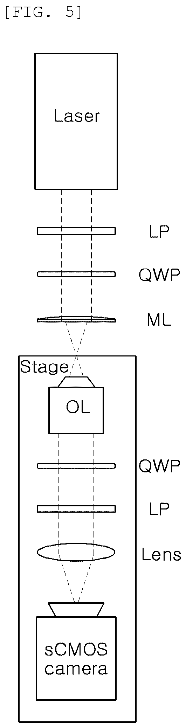

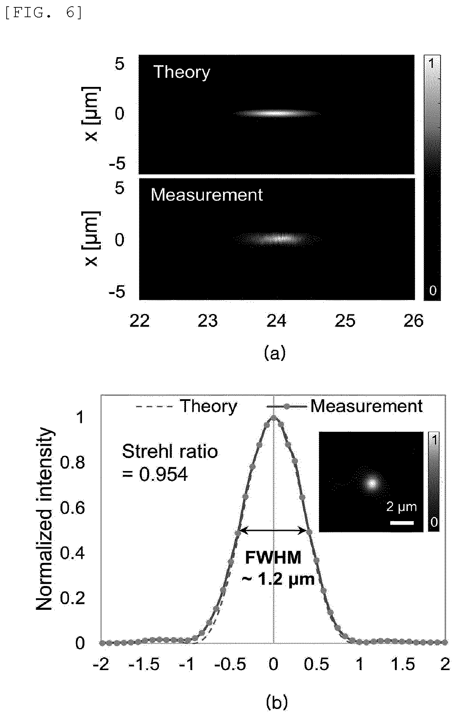

An apparatus was installed in the form shown in FIG. 5 with the obtained metalens, and a performance measurement experiment was conducted. As a result, as can be seen in FIG. 6, a focus was formed at the targeted focal length, and it was confirmed that it had an ideal Airy disk.

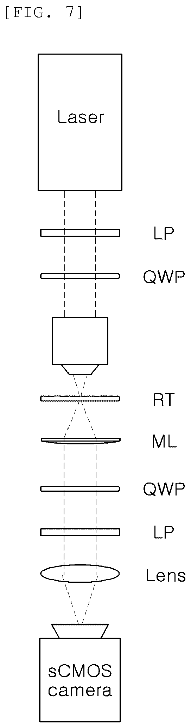

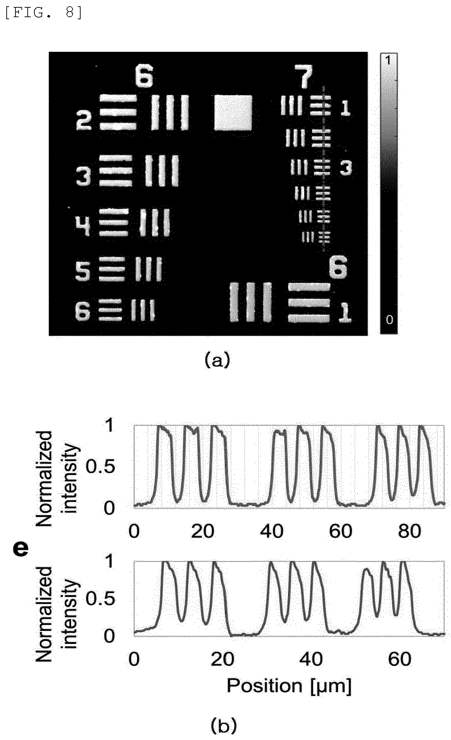

In addition, an apparatus was installed in the form shown in FIG. 7, and the imaging resolution was measured by imaging the USAF 1951 target shown in FIG. 8 (a). As a result, as can be confirmed in FIG. 8 (b), it was confirmed that a high resolution was obtained. Each graph in FIG. 8 (b) corresponds to the parts indicated by the red and blue lines in FIG. 8 (a), respectively.

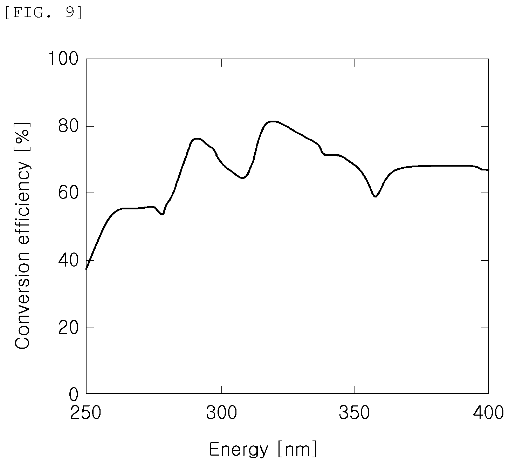

The conversion efficiency by wavelength of the metalens obtained in this example was confirmed, and the results are shown in FIG. 9. As can be confirmed from the figure, a high conversion efficiency of 60% or more was shown in the 300-400 nm band, which is a frequently used wavelength band. The conversion efficiency was determined as the ratio of light whose phase was adjusted while being converted to left-handed circularly polarized light (LCP) when right-handed circularly polarized light (RCP) was incident.

### Example 2

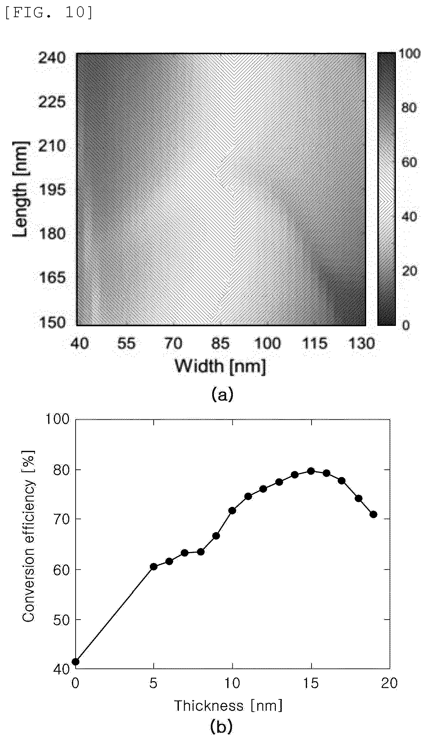

To confirm the optimal thickness of the high-refractive-index material layer, a metasurface was manufactured in the same manner as in Example 1, except that the wavelength of light was fixed at 325 nm and the length and width of the structural part (30) were changed. Then, the conversion efficiency was confirmed, and the results are shown in FIG. 10 (a). As can be confirmed from the figure, it was found that the conversion efficiency rapidly decreased as the width of the structural part (30) exceeded 100 nm. Although not shown in the figure, it was confirmed that a good conversion efficiency was shown until the width of the structural part (30) reached 30 nm. In addition, it can be seen from the figure that the conversion efficiency is high in the region where the length of the structural part (30) is 180 nm or more. Although not shown in the figure, a high conversion efficiency could be obtained until the length of the structural part (30) reached 300 nm.

### Example 3

The same structural part (30) as that obtained in Example 1 was formed, but the wavelength was fixed at 325 nm, and only the thickness of the high-refractive-index material layer (40), ZrO₂, was changed to examine the change in conversion efficiency. The thickness could be controlled by changing the number of cycles of the above-described process. The results are shown in FIG. 10 (b). As can be confirmed from the figure, a high conversion efficiency of 60% or more is obtained in the region where the thickness is 5 nm or more. As the thickness increases, the conversion efficiency increases, but when the value exceeds 15 nm, the conversion efficiency decreases, and when the thickness exceeds about 30 nm, the conversion efficiency becomes insufficient.

### Example 4 (Comparison between Comparative Example and Example 1)

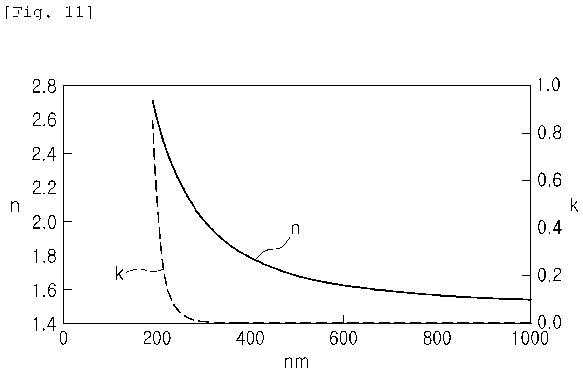

A nanostructure was manufactured in the same manner as in Example 1, except that the injection time of the precursor material was limited to 0.5 seconds and the plasma treatment time was limited to 10 seconds. The refractive index according to the wavelength of the manufactured nanostructure is shown in FIG. 11. As shown in FIG. 2, the refractive index of the nanostructure manufactured according to Example 1 shows a high value of 2.0 or more, whereas in the case of the comparative example shown in FIG. 11, it was confirmed that the refractive index value was less than 1.8, which is not sufficient to form a metasurface.

Therefore, the advantageous effects of the present disclosure could be confirmed.

## Claims

1. A metasurface, comprising:
a substrate; and
a plurality of nanostructures formed on at least one surface of the substrate,
wherein each of the plurality of nanostructures comprises a structural part comprising a polymer, and a high-refractive-index material layer formed on at least a portion of a surface of the structural part, and
wherein the high-refractive-index material layer has a refractive index of 2.0 or more for light with a wavelength of 400 nm.

2. The metasurface of claim 1,
wherein the high-refractive-index material layer has a refractive index of 3.0 or less for light with a wavelength of 400 nm.

3. The metasurface of claim 1,
wherein a thickness of the high-refractive-index material layer is 5 nm to 30 nm.

4. The metasurface of claim 1,
wherein the high-refractive-index material layer comprises ZrO₂.

5. The metasurface of claim 1,
wherein the high-refractive-index material layer is coated on the surface of the structural part by Atomic Layer Deposition (ALD) or Chemical Vapor Deposition (CVD).

6. The metasurface of claim 1,
wherein the structural part of the nanostructure is formed by imprinting.

7. The metasurface of claim 1,
wherein a sum of a length, a width, and a height of the structural part is 500 nm to 1500 nm.

8. The metasurface of claim 7,
wherein the length of the structural part is 180 nm to 300 nm.

9. The metasurface of claim 7,
wherein the width of the structural part is 30 nm to 100 nm.

10. The metasurface of claim 7,
wherein the height of the structural part is 450 nm to 700 nm.

11. The metasurface of any one of claims 7 to 10,
wherein an average distance (period) between a center of one structural part and a center of a structural part adjacent to the one structural part is 200 nm to 400 nm.

12. A method for manufacturing a metasurface, the method comprising:
preparing a substrate;
forming a plurality of structural parts comprising a polymer on the substrate by an imprint method; and
forming a high-refractive-index material layer on at least a portion of a surface of the plurality of structural parts, wherein the high-refractive-index material layer has a refractive index of 2.0 or more for light with a wavelength of 400 nm.

13. The method of claim 12,
wherein the forming of the high-refractive-index material layer comprises coating the high-refractive-index material layer on the surface of the structural parts by Atomic Layer Deposition (ALD) or Chemical Vapor Deposition (CVD).

14. The method of claim 13,
wherein when coating the high-refractive-index material layer on the surface of the structural parts by the Atomic Layer Deposition (ALD), a time for injecting a precursor material into a vacuum chamber per cycle is 2 to 4 seconds, and a time for performing a plasma treatment is 20 to 40 seconds.

15. The method of claim 12,
wherein a thickness of the high-refractive-index material layer is 10 nm to 20 nm.

16. The method of claim 12,
wherein a sum of a length, a width, and a height of the structural parts formed in the step of forming the plurality of structural parts is 500 nm to 1500 nm.
